Europäisches Patentamt

European Patent Office

Office européen des brevets

(11) Publication number : **0 490 519 A1**

(12) # EUROPEAN PATENT APPLICATION

(21) Application number : **91310910.4**

(22) Date of filing : **27.11.91**

(51) Int. Cl.⁵ : **F16K 5/02**

(30) Priority : **07.12.90 GB 9026689**

(43) Date of publication of application :
**17.06.92 Bulletin 92/25**

(84) Designated Contracting States :
**DE DK ES FR GB IT NL**

(71) Applicant : **BTR plc**
**Silvertown House Vincent Square**
**London SW1P 2PL (GB)**

(72) Inventor : **Hollingworth, Keith Jeffery, 'Kennel**
**Ground'**
**Gilberts End, Hanley Castle**
**Worcestershire WR8 0AS (GB)**

(74) Representative : **Treves, Barry William et al**
**BTR Group Patent & Trade Mark Service P.O.**
**Box 504**
**Erdington Birmingham B24 9QH (GB)**

(54) **Plug valve.**

(57)   A tapered plug valve having a sealing member (4) on the plug (3) positioned to surround the passageway (7) through the valve casing (1) on the downstream side in the valve closed position. No part of the member (4) is contacted by fluid flowing through the valve while the passageway (7) communicates with the port (6) in the plug (3). As a result the member (4) is less likely to suffer damage from moving liquid, especially if solid particles are present in the fluid.

Fig. 1

EP 0 490 519 A1

This invention relates to a plug valve and in particular to a tapered plug valve.

Such valves are used in practice in the oil, gas and chemical industries carrying fluids under relatively high pressures. Often such valves are located in relatively inhospitable environments e.g. on an offshore oil producing platform and therefore must be maintenance free for a period of e.g. eighteen months between servicing.

The valves are conventionally provided with sealing means between the tapered outer surface of the plug and the facing interior surface of the bore in the valve casing against which it seats. The sealing means may be in the form of a flowable sealant but if this is removed from between these facing surfaces for any reason, for example by the "washing" action of the fluid flowing through the valve, the seal may break down and/or the plug may become wedged against its seat and thereby rendered inoperable. Alternatively or additionally the sealing means may be in the form of a solid sealing member which is preferably of compressible material positioned between the surfaces. The sealing member not only enhances the sealing effect of the plug in the bore but can hold the facing surfaces very slightly apart, allowing the plug to be moved, i.e. the valve to be operated. However, if the sealing member is damaged by contact with the fluid flowing through the valve, the sealing effect is destroyed and if the damage is severe, the plug may become wedged. This damage may be caused by the corrosive effect of the fluid or by its velocity, especially if the fluid carries particles of solid matter which can have an abrasive effect on the sealing member.

It is an object of the present invention to provide a valve construction which is less likely to suffer from the problems of plug wedging or seal damage.

In accordance with the present invention a valve comprises a casing having a passageway therethrough for flow of fluid and a tapered bore intersecting said passageway; a tapered plug rotatably mounted in the said tapered bore adapted to block said passageway in a valve closed position of said plug and said plug having a port adapted to connect and be in communication with said passageway in a valve open position; the plug having a sealing member on its outer surface which completely surrounds the passageway on the downstream side in the valve closed position and which is in sealing engagement with the tapered bore in the valve closed position; the construction and arrangement being such that during rotation of the plug between the valve open and valve closed positions no part of the sealing member is contacted by fluid in the passageway while the port communicates with the passageway.

During rotation of the plug from the valve open to the valve closed position the sealing member traverses the passageway on the downstream side before the port allows fluid to pass to the downstream side. More than one sealing member may be provided in the plug, each member surrounding the passageway in the valve closed position.

Preferably the sealing member is carried in a respective channel formed in the plug surface and an energising member is provided at the base of the channel to press the sealing member outwards. In one form of the invention the energising member comprises a resilient ring and is located beneath the respective sealing member having a generally rectangular cross-section but with a curved cross-sectional profile for engaging the surface of the tapered bore.

One embodiment of the invention will now be described by way of example only with reference to the accompanying drawings of which:-

Figure 1 shows a cross-section through part of the valve in accordance with the invention, the valve being in the closed position, and

Figure 2 shows a cross-section on line II-II of Figure 1, the valve being in the open position.

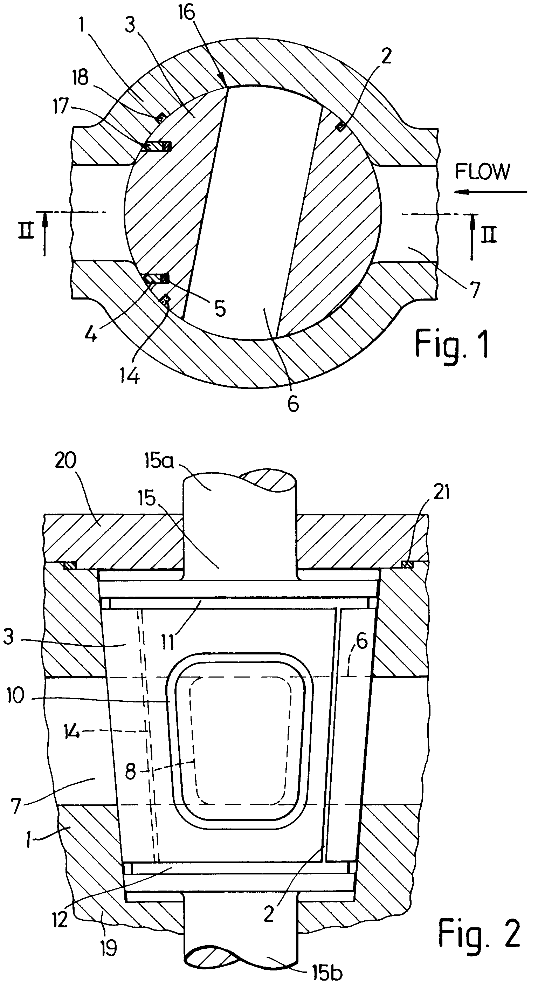

As shown in the drawings, a valve in accordance with the invention comprises a casing 1 provided with a tapered bore containing a tapered plug 3 mounted to rotate on a spindle 15 between valve closed and valve open positions. In the valve closed position, as shown in Figure 1, the plug 3 blocks the passageway 7 for carrying fluid through the valve.

The plug is formed with a port 6 which in the valve open position communicates with the passageway 7 to allow fluid to flow through the valve. The plug is provided on its tapered outer surface with a closed loop channel 10 having a generally trapezoidal form (see Figure 2). The channel is formed by a milling operation and retains at its base an energising member 5 and outwardly thereof a sealing member 4. The sealing member 4 has a generally rectangular cross-section configuration (see Figure 1) but with a curved cross-sectional profile on one side which sealingly engages the surface of the bore. The profile is such that since the sealing member is pressure assisted by the energising member, total sealing is ensured when the plug is in the valve closed position, but free movement across the edges of the passageway in the casing during rotation of the plug is allowed. The energising member is in the form of a resilient ring, which is normally of circular cross-section but being compressible adapts to the shape of the channel base. The energising member, being of compressible material exerts an outwards force on the sealing member to cause it to press against the surface of the bore, or if not in engagement with the bore, to protrude outwards from the plug surface.

In the closed position of the valve, shown in Figure 1, the channel 10 completely surrounds the outlet port of the passageway 7. For convenience the outline of the passageway is shown at 8 in dotted outline in Figure 2, but in the open position (shown in Figure 2) the channel 10 and the sealing member 4 engage the surface of the bore outlet surrounding a port.

The plug 3 is provided on its outer surface with two circumferential grooves 11, 12, one groove 11 being located near the wide end of the plug and the other 12, near the narrow end, and two longitudinal grooves 2, 14 which communicate with the circumferential grooves. The position of the longitudinal grooves 2, 14 is such that in both the valve closed and valve open positions and while moving between these positions the grooves always face the surface of the bore and never cross the passageway 7. This means that sealant carried by these grooves to the facing surfaces of the plug and bore will not be removed from the grooves by contact with fluid flowing through the valve. The surface of the bore may also be provided with sealant-carrying grooves, for example as shown at 18 in Figure 1, which communicate at their ends with the circumferential grooves 11, 12 on the plug surface.

As can be seen in Figure 1, the angle of rotation (in the anti-clockwise direction) of the plug from the valve closed to the valve open positions is greater than 90°, in this embodiment approximately 100°, to provide an arc length on the plug surface between the leading edge 16 of the port 6 and the closer part 17 of the sealing member which is greater than the arc length across the passageway 7. This means that the sealing member has moved cross the body outlet port before the fluid is flowing through the valve, thus preventing damage to the sealing member 4 caused by movement of the fluid or particles carried thereby. Alternatively the valve may be constructed whereby the relative position of the longitudinally extending side of the trapezoidal channel 10 (and sealing and energising members retained therein) and the width of the passageway 7 in relation to the plug circumference is such that the sealing member never makes contact with fluid whilst it is flowing through the valve for an angle of 90° (or other predetermined angles) between the valve open and valve closed positions, the circumferential movement of the sealing member being greater than the width of the port.

The casing 1 as shown in the drawings comprises a lower housing 19 and a top cover 20 retained thereon by bolts (not shown). A seal 21 is provided beween the cover and lower housing. The upper part 15a of the stem 15 projects through a hole in the cover 20, suitable seals (not shown) being provided. The lower part 15b of the stem 15 projects through a hole in the base of the lower housing, suitable seals (not shown) being provided. An obturator e.g. a wrench or a gearbox (not shown), can be connected to the upper or lower part of the stem by means of which the plug may be rotated between the valve open and valve closed positions.

The embodiment described above comprises a unidirectional valve where the sealing member 4 is provided on the plug to seal the downstream or outflow side of the passageway 7.

It is an advantage of the valve of the present invention that the metal-to-metal plug to bore surfaces are provided with additional sealing in the form of a pressure-assisted sealing member and, as described, the facility to apply extra sealant in emergency to the surfaces through the grooves provided in the plug and bore.

## Claims

1. A valve comprising a casing (1) having a passageway (7) therethrough for flow of fluid and a tapered bore intercepting said passageway (7); a tapered plug (3) rotatably mounted in the said tapered bore adapted to block said passageway (7) in a valve closed position of said plug (3) and said plug (3) having a port (6) adapted to connect and be in communication with said passageway (7) in a valve open position; characterised by the plug (3) having a sealing member (4) on its outer surface which completely surrounds the passageway (7) on the downstream side in the valve closed position and which is in sealing engagement with the tapered bore in the valve closed position; the construction and arrangement being such that during rotation of the plug (3) between the valve open and the valve closed positions no part of the sealing member (4) is contacted by fluid in the passageway (7) while the port (6) communicates with the passageway (7).

2. A valve according to Claim 1 characterised in that during rotation of the plug (3) from the valve closed to the valve open position the sealing member (4) traverses the passageway (7) on the downstream side before the port (6) allows fluid to pass to the downstream side.

3. A valve according to Claim 1 or Claim 2 characterised in that more than one sealing member (4) is provided on the plug (3), each member (4) surrounding the passageway (7) in the valve closed position.

4. A valve according to any one of the preceding claims characterised in that the sealing member (4) is carried in a respective channel (10) formed in the plug surface.

5. A valve according to Claim 4, characterised in that an energising member (5) is provided at the base of the channel (10) to press the respective sealing member (4) outwards.

6. A valve according to Claim 5 characterised in that the energising member (5) comprises a resilient ring located beneath the respective sealing member (4).

7. A valve according to any one of the preceding claims characterised in that the sealing member (4) has a generally rectangular cross-section with a curved cross-sectional profile for engaging the surface of the tapered bore.

8. A valve according to any one of the preceding claims characterised in that the angle of rotation of the plug (3) from the valve closed to the valve open position is greater than 90°.

9. A valve according to any one of the preceding claims characterised in that the angle of rotation of the plug (3) from the valve closed to the valve open position is approximately 100°.

FLOW

Fig. 1

Fig. 2

EP 0 490 519 A1

## European Patent Office

## EUROPEAN SEARCH REPORT

Application Number

EP 91 31 0910

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-2 114 789 (URQUHART)<br>* page 2, line 15 - page 3, line 61; figures 10,11,16,17 * | 1,3,4,7 | F16K5/02 |
| A | US-A-3 647 181 (HULSLANDER)<br>* column 2, line 61 - column 4, line 3; figures 4,7,10-12,15 * | 1,3,4 | |
| A | FR-A-915 381 (GUIOT)<br>* the whole document * | 1,3,4 | |
| | | | TECHNICAL FIELDS SEARCHED (Int. Cl.5 ) |
| | | | F16K |

The present search report has been drawn up for all claims

| Place of search | Date of completion of the search | Examiner |
|---|---|---|
| THE HAGUE | 12 MARCH 1992 | CHRISTENSEN C. W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)